# EUROPÄISCHE PATENTSCHRIFT

(11) **EP 1 682 800 B1**
(45) Veröffentlichungstag und Bekanntmachung des Hinweises auf die Patenterteilung: **09.01.2008**
(21) Anmeldenummer: 04802678.5
(22) Anmeldetag: 05.11.2004
(51) Int. Cl.: F16J 15/14, F16J 15/32, F16J 15/34, C09J 11/08

(54) **DICHTUNG**
SEAL
JOINT

(30) Priorität: 11.11.2003 DE 10352674
(43) Veröffentlichungstag der Anmeldung: 26.07.2006
(73) Patentinhaber: Federal-Mogul Sealing Systems Bretten GmbH, 75015 Bretten (DE)
(72) Erfinder: WARNECKE, Frank, 76133 Karlsruhe (DE); JIN, Xiaoling, Farmington Hills, MI 48335 (US)
(86) Internationale Anmeldenummer: PCT/DE2004/002450
(87) Internationale Veröffentlichungsnummer: WO 2005/047740

(56) Entgegenhaltungen:
- EP-A- 1 211 425
- DE-A1- 1 957 051
- DE-A1- 2 918 787
- US-A- 2 446 243
- US-A- 6 007 069

## Beschreibung

Die Erfindung betrifft ein Dichtelement, zumindest beinhaltend einen Gehäusebereich, mindestens einen dynamisch sowie mindestens einen statisch wirkenden Dichtbereich, der zumindest partiell mit dem Gehäusebereich in Wirkverbindung steht wobei der statische Dichtbereich zumindest partiell mit einem, einen vorgebbaren Anteil an reibungsreduzierenden Elementen enthaltenden, aushärtbaren Stoff überzogen ist.

Durch die DE-A 40 18 216 ist eine Wellendichtung bekannt geworden, beinhaltend einen Lippendichtungsring aus Polytetrafluorethylen oder einem artverwandten Werkstoff, mit einem eine Dichtlippe bildenden Radialschenkel sowie einem Axialschenkel am Außenumfang. Die Wellendichtung beinhaltet ein Gehäuse, das im Bereich einer Aufnahmebohrung einen statischen Dichtbereich aufweist, der aus einem Dichtlack gebildet ist.

Der US-A 2,889,163 ist eine Wellendichtung zu entnehmen, die einen Gehäusebereich, einen dynamisch sowie einen statisch wirkenden Dichtbereich aufweist. Der statische Dichtbereich ist im radial äußeren Umfangsbereich des Gehäusebereiches vorgesehen und als Beschichtung geringer radialer Dicke ausgebildet. Die Beschichtung wird gebildet aus einem thermoplastischen Harz, wie beispielsweise Acryl, Vinyl, Phenol oder dergleichen.

Aus der US-A- 6 007 069 ist eine Gleitringdichtung zu entnehmen, dessen Gleitring mit einem aushärtbaren reibungsreduzierenden Werkstoff beschichtet ist. Bei dem Werkstoff handelt es sich um PTFE. Eine Beschichtung für ein Elastomer ist nicht vorgesehen.

Die DE 29 18 787 A1 offenbart einen Wellendichtring mit einem Dichtlacküberzug auf dem metallischen Versteifungsring. Eine Beschichtung auf einem Elastomerkörper ist dieser Schrift nicht zu entnehmen.
Des weiteren ist allgemein bekannt, bei Dichtelementen, die statische Dichtbereiche aufweisen, selbige durch unterschiedliche Elastomere in Verbindung mit unterschiedlichen Profilierungen vorzusehen.

Die dem Stand der Technik zugrundeliegenden Probleme sind im wesentlichen darin begründet, dass zur Herabsetzung der Montagekräfte zwar dünne Gleitbeschichtungen eingesetzt werden, die jedoch den Nachteil aufweisen, dass sie auch die im Betriebszustand notwendigen Haltekräfte herabsetzen, wodurch im ungünstigsten Fall ein Herauswandern des Dichtelementes aus der zugehörigen Aufnahme erfolgen kann. Statische Abdichtungen auf Basis von Elastomeren lassen sich vielfach wegen hoher Montage- und Rückstellkräfte nur schwierig in der Aufnahmebohrung platzieren.

Der Erfindung liegt die Aufgabe zugrunde, ein im gattungsbildenden Teil des ersten Patentanspruches beschriebenes Dichtelement dergestalt weiterzubilden, dass einerseits ein leichtes Montieren desselben möglich ist, im Betriebszustand dennoch ausreichende Haltekräfte gegeben sind.

Diese Aufgabe wird erfindungsgemäß durch die Merkmale des Patentanspruch 1 gelöst.

Vorteilhafte Weiterbildungen des Erfindungsgegenstandes sind den Unteransprüchen zu entnehmen.

Infolge der reibungsreduzierenden, d.h. die Gleiteigenschaften verbessernden, Elemente im aushärtbaren Stoff können die Montagekräfte herabgesetzt werden. Die vorteilhafterweise unter Temperatureinwirkung aushärtbaren Überzüge auf dem statischen Dichtbereich bewirken nach Inbetriebnahme des Dichtelementes eine Erhöhung der notwendigen Haltekräfte, so dass ein Herauswandern des Dichtelementes aus dem zugehörigen Aufnahmeelement sicher vermieden wird.

Einem weiteren Gedanken der Erfindung gemäß, ist das Dichtelement durch einen Radialwellendichtring gebildet, dessen eine Umfangsfläche, insbesondere die äußere Umfangsfläche, mit dem üblicherweise aus einem Elastomermaterial gebildeten statisch wirkenden Dichtbereich versehen ist. Der statisch wirkende Dichtbereich kann beispielsweise auch in profilierter Form vorgesehen werden, wobei der Überzug dann zumindest die Spitzenbereiche des Profils abdeckt.

Neben Radialwellendichtringen kann die Erfindung auch bei axial wirkenden Gleitringdichtungen mit entsprechenden statischen Dichtbereichen oder aber auch bei Laufwerkdichtungen zum Einsatz gelangen, sofern diese über entsprechend ausgebildete Gehäuseteile mit zugeordneten statischen Dichtbereichen ausgestattet sind.

Die vorteilhafterweise auf dem elastomeren Innen- bzw. Außenumfang eines Radialwellendichtringes aufgebrachte Beschichtung erhöht die Haltekräfte des Radialwellendichtringes im Bereich der Aufnahmebohrung, so dass eine höhere Betriebssicherheit, über die Lebensdauer des Dichtelementes gesehen, erreicht werden kann. Darüber hinaus werden die Montagekräfte erheblich reduziert, was einer vereinfachten Montage zu Gute kommt.

Wie bereits angesprochen, kann die Erhöhung der Haltekraft durch die Reaktion der Beschichtung unter Einfluss der Temperaturerhöhung im Betriebszustand erreicht werden. Ebenfalls denkbar ist, dass eine Beschichtung, insbesondere ein Klebstoff, zum Einsatz gelangt, der bereits in kaltem Zustand bzw. durch die bei der Montage erzeugte Reibungswärme aushärtet.

Der Erfindungsgegenstand ist anhand eines Ausführungsbeispiels in der Zeichnung dargestellt und wird wie folgt beschrieben. Es zeigen:
- Figur 1: Prinzipskizze eines Radialwellendichtringes;
- Figur 2: Prinzipskizze eines Teilbereiches einer Gleitringdichtung.

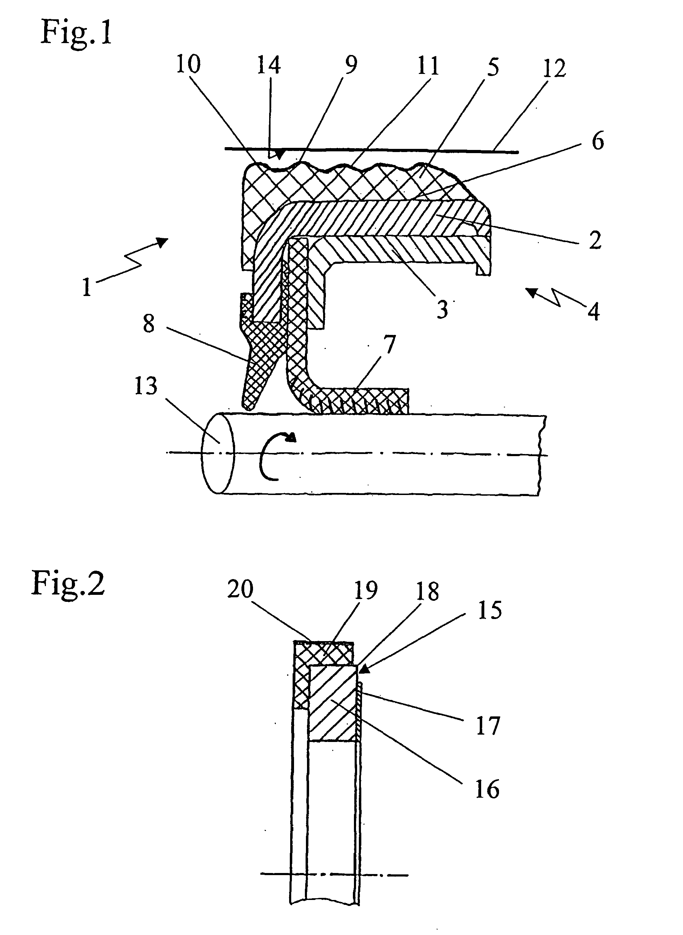

Figur 1 zeigt einen Radialwellendichtring 1, beinhaltend einen aus zwei Blechkörpern 2, 3 gebildeten Gehäusebereich 4, einen statisch wirkenden Dichtbereich 5 in Form einer auf dem Außenumfang 6 des Blechkörpers 2 aufgebrachten Elastomerschicht sowie einem beispielsweise aus PTFE bestehenden dynamisch wirkenden Dichtbereich 7, in Wirkverbindung mit einer Zusatzdichtlippe 8, gebildet aus dem Elastomerenmaterial des statisch wirkenden Dichtbereiches 5. Der statische Dichtbereich 5 beinhaltet in diesem Beispiel ein Wellenprofil 9, wobei die äußere Umfangsfläche 10 des Wellenprofils 9 mit einem Überzug 11 versehen ist, der in diesem Beispiel aus einem, unter Temperatureinwirkung aushärtenden Klebstoff ausgebildet ist. Der Klebstoff soll in diesem Beispiel folgende Zusammensetzung aufweisen: 10 % Acrylpolymer, 5 % PTFE sowie 85 % Wasser. Der statische Dichtbereich wird in eine nur angedeutete Aufnahmebohrung 12 eingebracht, während der dynamische Dichtbereich 7 mit einer rotierenden Welle 13 in Wirkverbindung steht. Bedingt durch den PTFE-Anteil innerhalb der Beschichtung 11 kann eine erleichterte Montage des Radialwellendichtringes 1 in die Aufnahmebohrung 12 herbeigeführt werden. Im Betriebszustand, d.h. wenn die Umgebungstemperatur in der Aufnahmebohrung 12 ansteigt, härtet der Klebstoff aus und geht zumindest partiell eine Verbindung mit der inneren Umfangsfläche 14 der Aufnahmebohrung 12 ein, wodurch im Betriebszustand eine Erhöhung der Haltekraft herbeigeführt wird. Neben einer erleichterten Montage, bedingt durch die reibungsreduzierenden Elemente, kann somit im Betriebszustand eine nicht unerhebliche Erhöhung der Haltekraft herbeigeführt werden, so dass ein Herauswandern des Radialwellendichtringes 1 aus der Aufnahmebohrung 12 sicher verhindert wird.

Figur 2 zeigt einen Teil einer axial wirkenden Gleitringdichtung 15.
Selbige beinhaltet einen Gleitring 16 mit einer dynamisch wirkenden Gleitfläche 17, eine einen Gehäusebereich bildende äußere Umfangsfläche 18, die einen statischen Dichtbereich 19 aus elastomerem Material aufnimmt. Der statische Dichtbereich 19 wirkt mit einer nicht dargestellten Aufnahmebohrung zusammen und ist zur Erleichterung der Montage mit einer Überzug 20 aus einem aushärtbaren Klebstoff überzogen, der gleiche oder ähnliche Eigenschaften, wie der des Überzuges 11 gem. Figur 1 aufweisen kann.

## Patentansprüche

1. Dichtelement, zumindest beinhaltend einen Gehäusebereich (4, 18), mindestens einen dynamisch (7, 8, 17) sowie mindestens einen statisch wirkenden Dichtbereich (5, 19), der zumindest partiell mit dem Gehäusebereich (4, 18) in Wirkverbindung steht, wobei der statische Dichtbereich (5, 19) zumindest partiell mit einem, einen vorgebbaren Anteil an reibungsreduzierenden Elementen enthaltenden, aushärtbaren Stoff (11, 20) überzogen ist, **dadurch gekennzeichnet, dass** der Überzug (11, 20) folgende Zusammensetzung aufweist:
5 - 20 % Acrylpolymer
0 - 10 % PTFE
65 - 95 % Wasser

2. Dichtelement nach Anspruch 1, **dadurch gekennzeichnet, dass** der Stoff (11, 20) unter Temperatureinwirkung aushärtbar ist.

3. Dichtelement nach einem der Ansprüche 1 bis 2, gebildet durch einen Radialwellendichtring, dessen eine Umfangsfläche (6) mit dem statischen Dichtbereich (5) versehen ist.

4. Dichtelement nach Anspruch 3, **dadurch gekennzeichnet, dass** die äußere Umfangsfläche (6) mit dem, insbesondere aus Elastomer bestehenden, statisch wirkenden Dichtbereich (5) versehen ist.

5. Dichtelement nach Anspruch 3 oder 4, **dadurch gekennzeichnet, dass** der statische Dichtbereich (5) in profilierter Form (9) ausgebildet ist.

## Claims

1. Sealing element, at least comprising a housing region (4, 18), at least one dynamically active sealing region (7, 8, 17) and at least one statically active sealing region (5, 19), which at least partially interacts with the housing region (4, 18), wherein the static sealing region (5, 19) is at least partially coated with a hardenable material (11, 20) containing a predetermined proportion of friction-reducing elements, **characterised in that** the coating (11, 20) has the following composition:
5% - 20% acrylic polymer
0% - 10% PTFE
65% - 95% water.

2. Sealing element according to claim 1, **characterised in that** the material (11, 20) is hardenable under the effects of temperature.

3. Sealing element according to one of claims 1 or 2, comprising a radial shaft sealing ring whose one peripheral surface (6) is provided with the static sealing region (5).

4. Sealing element according to claim 3, **characterised in that** the outer peripheral surface (6) is provided with the statically active sealing region (5) which is made, in particular, from elastomer.

5. Sealing element according to claim 3 or 4, **characterised in that** the static sealing region (5) is configured in a profiled form (9).

## Revendications

1. Elément d'étanchéité, présentant au moins une zone de boîtier (4, 18), au moins une zone d'étanchéité dynamique (7, 8, 17) et au moins une zone d'étanchéité statique (5, 19) qui est au moins en partie en liaison fonctionnelle avec la zone de boîtier (4, 18), la zone d'étanchéité statique (5, 19) étant revêtue au moins en partie d'une matière (11, 20) durcissable contenant une proportion prescriptible d'éléments réduisant le frottement, **caractérisé en ce que** le revêtement (11, 20) présente la composition suivante:
5 à 20 % de polymère acrylique
0 à 10 % de PTFE
65 à 95 % d'eau.

2. Elément d'étanchéité selon la revendication 1, **caractérisé en ce que** la matière (11, 20) est durcissable sous l'effet de la température.

3. Elément d'étanchéité selon l'une des revendications 1 à 2, formé par un joint d'arbre radial dont une surface périphérique (6) est pourvue de la zone d'étanchéité statique (5).

4. Elément d'étanchéité selon la revendication 3, **caractérisé en ce que** la surface périphérique extérieure (6) est pourvue de la zone d'étanchéité statique (5) en particulier en élastomère.

5. Elément d'étanchéité selon la revendication 3 ou 4, **caractérisé en ce que** la zone d'étanchéité statique (5) est réalisée avec une forme profilée (9).
